# EUROPEAN PATENT APPLICATION

(11) **EP 2 210 756 A1**
(43) Date of publication of application: **28.07.2010**
(21) Application number: 10151156.6
(22) Date of filing: 20.01.2010
(51) Int. Cl.: B60J 11/02

(54) **Multipurpose protective sheet**

(30) Priority: 22.01.2009 IT CR20090002
(71) Applicant: A & B SAS, 26048 Sospiro (CR) (IT)
(72) Inventor: Federeci, Alessandro, 26048, SOSPIRO (CR) (IT)
(74) Representative: Marcio', Paola

(57) **Abstract**

A multipurpose protective sheet (A) comprising a plurality of folding lines (3) arranged longitudinally to form flaps (4) less wide than that of said sheet, wherein said flaps (4) are folded over themselves along said folding lines (3) to form a folded strip (2) and said folded strip (2) is wound around itself to form a roll (1) without a core with the same width as that of one of said flaps (4), wherein said roll (1) comprises a plurality of sheets (A) arranged in succession one after another, joined along predefined transverse tear lines (5).

## Description

The invention relates to the sector of sheets or coverings for protecting large surfaces or bulky objects.

More in detail, the invention relates to a multipurpose protective sheet of large dimensions to protect from varnish, paint, dust, water, humidity and in general to isolate ground surfaces, floors, walls, vehicles, motorcycles, watercraft, furniture, small buildings, flowers and plants, etc. from the outside environment while performing maintenance work and repairs or during periods of disuse.

According to prior art, multipurpose protective sheets of large dimensions used for the aforesaid purposes, destined to be easily handled by the user, are generally made of high or low density transparent polyethylene film, are square or rectangular in shape with variable width and length so as to cover surfaces of around 10 to 100 sqm, and have a thickness ranging from 0.010 to 0.100 mm, in order not to be too heavy.

The sheets are normally folded like a tablecloth along longitudinal and transverse fold lines, until obtaining dimensions of a few tens of centimeters per side, and then sold in individual packs inserted in PVC bag.

Alternatively, the sheet is folded only along longitudinal lines to form flaps of lesser width than that of the sheet; the flaps are folded over themselves along said longitudinal folding lines to form a folded strip and the folded strip is wound around itself to form a roll, normally without a core, with the same width as that of one of said flaps. The roll formed by a single sheet is then bagged as specified above.

Said multipurpose protective sheets sold in individual packs have some disadvantages:
- they are somewhat impractical as they make the purchase of a plurality of packs necessary to obtain a plurality of sheets;
- they produce a large quantity of waste to be disposed of due to the packaging material used for their sale;
- they oblige the user to use cutting tools to obtain portions of sheet of smaller dimensions than those of the initial sheet.

Aim of the invention is to overcome these limits and disadvantages.

Aim of the present invention is to provide in a single pack a plurality of sheets joined to one another in succession, but easy to separate, while still being light, easy to handle, ergonomic, easy to transport and store.

The aim is achieved with a multipurpose protective sheet comprising a plurality of folding lines arranged longitudinally to form flaps less wide than said sheet, wherein said flaps are folded over themselves along said folding lines to form a folded strip and said folded strip is wound around itself to form a roll without a core as wide as one of said flaps, **characterized in that** said roll comprises a plurality of sheets arranged in succession one after another, joined along predefined transverse tear lines.

Advantageously, said folded strip comprises two parallel fold lines arranged longitudinally to form three flaps which can be folded over themselves in the shape of a Z.

Likewise, the folded strip can comprise two fold lines arranged longitudinally to form three flaps which can be folded over themselves in the shape of a C, a G or according to prior art.

According to the needs, said flaps have the same or different widths to one another.

According to a further aspect of the invention, the tubular strip comprises three or more folding lines arranged longitudinally to form four or more flaps which can be folded over themselves in a bellows fashion.

The center of the roll can advantageously provide for the use of a hollow or solid tubular element, with cross section of appropriate geometry to form the winding core of the roll itself.

According to a preferred aspect of the invention, weld lines are present upstream and downstream of each transverse tear line, parallel to said tear line.

According to a further aspect of the invention, said strip comprises at least one linear adhesive band disposed longitudinally, covered by a removable protection.

The invention has numerous advantages: the roll obtained from the folded strip is practical, ergonomic, easy to handle, respects the weight that can be lifted with one hand defined by law, considerably reduces the production of final waste to be disposed of, makes it possible to choose where to make the tear on the basis of the length of sheet required for the job, does not require the use of cutting tools thereby reducing the risk of accidents at work and, both in case it comprises a tubular winding core and in case it does not, can be hung in a horizontal position to facilitate tearing off individual sheets.

Each single sheet can also have the ends of the flaps welded, so as to form a maxi hood with a body with very large extension, due to a plurality of folding lines, open along a longitudinal line, to wrap bulky objects without the flaps being free to fly about.

Finally, each sheet can comprise one or more adhesive lines to allow fixing to the object to be protected.

The advantages of the invention will be more apparent hereunder, in the description of a preferred embodiment, provided by way of nonlimiting example and with the aid of the figures, wherein:
Fig. 1 shows a perspective view of a roll in which the folded strip formed by individual multipurpose protective sheets is divided into three folded flaps and is rolled around itself according to the invention;
Fig. 2 shows a top view of an unfolded portion of strip of the roll of Fig. 1;
Fig. 3 shows a top view of an unfolded portion of strip, folded according to a different embodiment;
Fig. 4 shows a perspective view of a dust sheet obtained from the folded and rolled up strip of Fig. 3, open in using position;
Fig. 5 shows a top view of an unfolded portion of strip folded according to a further embodiment;
Fig. 6 shows a cross section of the strip of Fig.5;
Fig. 7 shows a variant of the roll of Fig. 1 comprising a central support core.

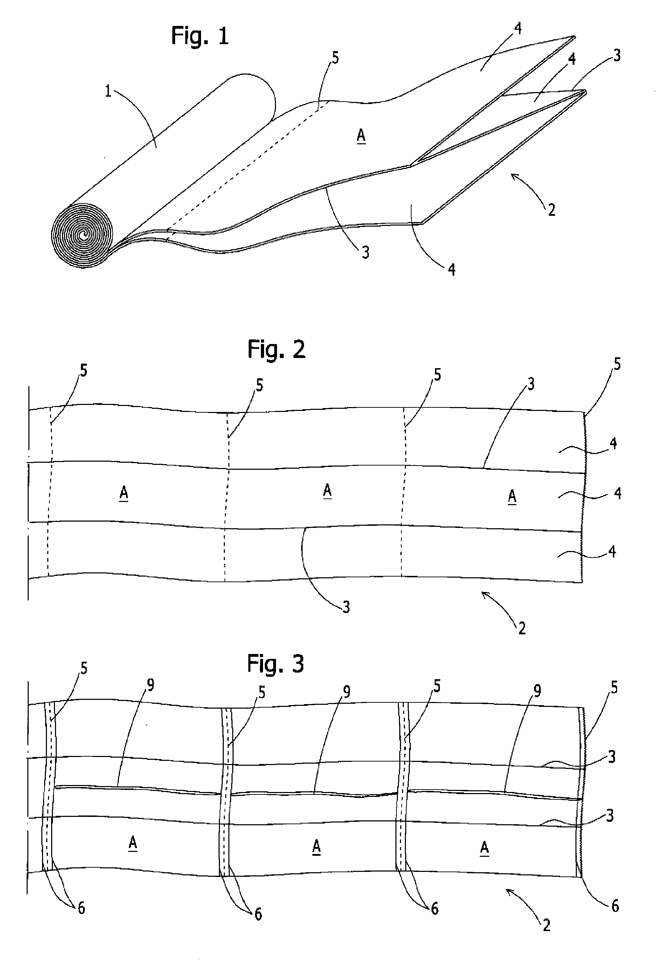

With reference to Fig. 1, this shows a roll 1 formed by a folded strip 2 with parallel and longitudinal folding lines 3 that divide it into flaps 4 having a width equal to a fraction of that of the tubular strip 2. The flaps can be folded over one another according to a shape in the form of a Z, so that the width of the roll 1 is the same as that of the individual flaps 4.

The folded strip 2 can be manufactured by continuous extrusion of a closed tube in the form of an endless sleeve, subsequently cut, or produced in the form of folded film and subsequently welded in longitudinal direction.

Transverse tear or pre-cut lines 5, produced according to techniques known in the plastic film sector, are disposed at regular intervals along said folded strip, to allow separation of the strip into individual modules A forming a multipurpose protective sheet.

The material used to produce the folded strip is of known type and belonging to the polyolefin family, such as PELD, PEHD, PELLD, PEMLLD, PP, PET, etc., in virgin or regenerated version.

The flaps 4 can be of various width and folded differently, for example in the shape of a C, G, M, etc, according to prior art.

With reference to Fig. 2, this shows a folded strip 2 in unrolled position, where it is evident that each single sheet A can be obtained from tearing the pre-cut transverse lines 5, regardless of the longitudinal folding method of the strip 2.

With reference to Fig. 3, this shows a folded strip 2 in unrolled position, according to a variant of embodiment of the invention, wherein weld lines 6 are present upstream and downstream of each transverse tear line 5, parallel to said tear line, positioned a short distance therefrom.

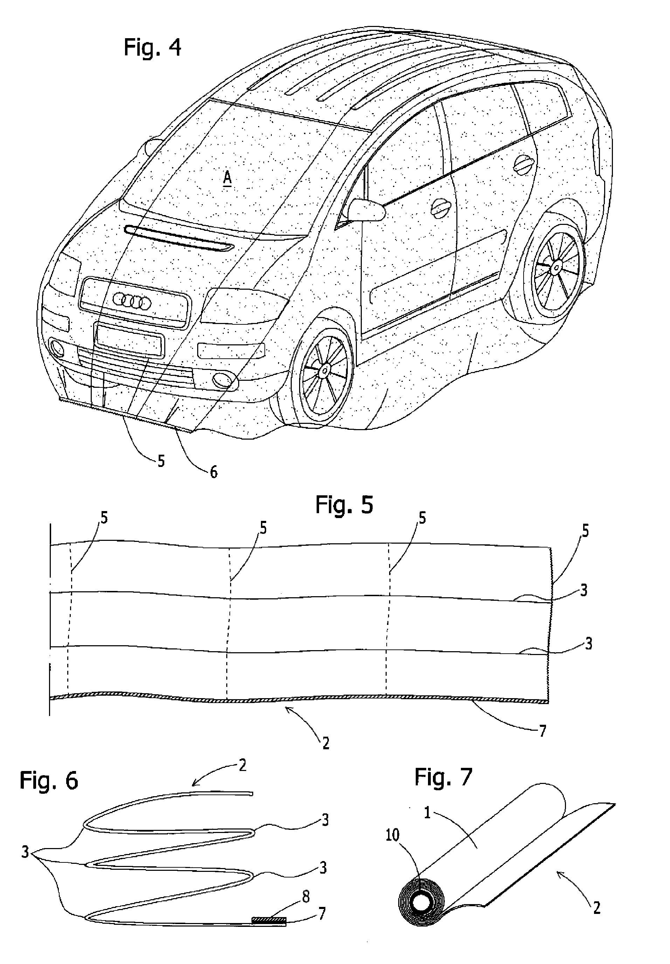

These weld lines allow the formation of a maxi hood, shown in Fig. 4, closed at the ends but open along a longitudinal line 9 formed by the free ends of the sheet A not welded together, which allow particularly bulky objects to be covered.

With reference to Fig. 5, this shows the presence of a longitudinal band 7 of adhesive material of known type, such as hot melt glue, which forms a further variant of the invention.

Fig. 6 shows in greater detail said band 7, protected by a strip 8 of removable material of known type, such as silicone coated paper or plastic film, which allows the individual sheet to stick to the surface to be covered.

The strip 2 in this case comprises a series of folds 3 so that the flaps 4 form a thickness substantially equal to that of the adhesive band 7 covered with the removable strip 8, so that the roll 1 can maintain a substantially cylindrical form.

Finally, with reference to Fig. 7, this shows a roll 1 comprising a core 10 on which the folded strip 2 is wound. Said core can be formed of a tubular element with a geometrically appropriate cross section, hollow or solid, circular or with a plurality of sides, for example made of recyclable plastic, cardboard, metal, etc.

As is apparent to those skilled in the art, the invention has been described referring by way of example to a folded strip divided into three flaps which can be folded over one another by means of two longitudinal folding lines, but can be provided with a single longitudinal folding line or with three or more folding lines of the flaps which, in this case, can have different widths and be folded over one another in a bellows fashion or to form another shape according to prior art, always achieving the advantages set forth above.

## Claims

1. Multipurpose protective sheet (A) comprising a plurality of folding lines (3) arranged longitudinally to form flaps (4) less wide than said sheet, wherein said flaps (4) are folded over themselves along said folding lines (3) to form a folded strip (2) and said folded strip (2) is wound around itself to form a roll (1) without a core as wide as one of said flaps (4), **characterized in that** said roll (1) comprises a plurality of sheets (A) arranged in succession one after another, joined along predefined transverse tear lines (5).

2. Multipurpose protective sheet according to claim 1, **characterized in that** said folded strip (2) comprises two parallel fold lines (3) arranged longitudinally to form three flaps (4).

3. Multipurpose protective sheet according to claim 2, **characterized in that** said flaps (4) can be folded over themselves in the shape of a Z, C, G.

4. Multipurpose protective sheet according to claim 1, **characterized in that** said folded strip (2) comprises three or more parallel fold lines (3) arranged longitudinally to form four or more flaps (4).

5. Multipurpose protective sheet according to claim 4, **characterized in that** said flaps (4) can be folded over themselves in a bellows fashion, in the shape of an M, N, W.

6. Multipurpose protective sheet according to claim 1, **characterized in that** weld lines (6) are present upstream and downstream of each transverse tear line (5), parallel to said line (5).

7. Multipurpose protective sheet according to claim 1, **characterized in that** said folded strip (2) comprises a longitudinal band (7) of adhesive material protected by a strip (8) of removable material.

8. Multipurpose protective sheet according to anyone of the preceding claims, **characterized in that** said folded strip is wound on a core (10).

9. Multipurpose protective sheet according to claim 8, **characterized in that** said core (10) comprises a tubular element with hollow or solid cross section.

10. Multipurpose protective sheet according to claim 9, **characterized in that** the section of said tubular element has a circular or polygonal structure.
